**Europäisches Patentamt**

**European Patent Office**

**Office européen des brevets**

(11) Veröffentlichungsnummer : **0 381 832 B1**

# (12) EUROPÄISCHE PATENTSCHRIFT

(45) Veröffentlichungstag der Patentschrift :
**12.08.92 Patentblatt 92/33**

(51) Int. Cl.$^5$ : **B60K 17/00**

(21) Anmeldenummer : **89122252.3**

(22) Anmeldetag : **02.12.89**

(54) **Antriebsaggregat für Kraftfahrzeug.**

(30) Priorität : **10.02.89 DE 3903941**

(43) Veröffentlichungstag der Anmeldung :
**16.08.90 Patentblatt 90/33**

(45) Bekanntmachung des Hinweises auf die
Patenterteilung :
**12.08.92 Patentblatt 92/33**

(84) Benannte Vertragsstaaten :
**DE ES FR GB IT NL SE**

(56) Entgegenhaltungen :
**EP-A- 0 032 370**
**EP-A- 0 173 898**
**DE-A- 3 044 288**
**DE-B- 2 843 917**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Müller, Robert, Dipl.-Ing.**
**Badstrasse 21**
**W-7251 Mönsheim (DE)**
Erfinder : **Eisenhauer, Egon, Dipl.-Ing.**
**Buchenstrasse 6/1**
**W-7258 Heimsheim (DE)**

EP 0 381 832 B1

**Beschreibung**

Die Erfindung bezieht sich auf ein Antriebsaggregat nach dem Oberbegriff des Anspruchs 1.

Bei einem bekannten Antriebsaggregat dieser Art (DE-PS 28 43 917) ist das Zentralrohr einerseits mit der Triebwerkseinheit und andererseits mit der hinteren Antriebseinheit starr verbunden, die bei einer Transaxle-Bauweise von einem Wechselgetriebe gebildet ist. Das auf diese Weise geschaffene starre Antriebsaggregat wird insbesondere durch eine Gaskraftanregung des Motors unter Lastbetrieb zu Schwingungen angeregt, was auf eine Torsionsresonanz des Antriebsstranges zurückzuführen ist, wobei das Zentralrohr als Drehfeder und das Getriebe als Drehmasse wirkt.

Der Erfindung liegt die Aufgabe zugrunde, ein Antriebsaggregat der im Oberbegriff des Anspruchs 1 angegebenen Art zu schaffen, bei dem trotz einer starren Verbindung des Zentralrohrs mit der Triebwerkseinheit und der hinteren Antriebseinheit eine möglichst weitgehende Absenkung von Torsionsresonanzen und somit von Schwingungen zu erzielen ist.

Diese Aufgabe wird erfindungsgemäß durch die kennzeichnenden Merkmale des Anspruchs 1 gelöst. Weitere vorteilhafte Merkmale beinhalten die Unteransprüche.

Durch ein mit den Einheiten des Antriebsaggregats starr verbundenes und wenigstens einen im Bereich von geringen Biegespannungen liegenden Längsschlitz versehenes Zentralrohr wird die Torsionssteifigkeit reduziert. Die Biegesteifigkeit des Zentralrohrs wird aufgrund der Lage des Längsschlitzes in einer senkrechten Längsmittenebene des Rohres und im Bereich geringer Biegespannungen weitgehendst unverändert beibehalten. Hierdurch wird die Torsionseigenfrequenz des Antriebsaggregats soweit abgesenkt, daß eine Torsionsresonanz des Antriebsstranges im Fahrdrehzahlbereich nicht mehr auftritt.

Durch die spezielle Anordnung des Längsschlitzes im Zentralrohr wird in vorteilhafter Weise erreicht, daß die Torsionsresonanz des Antriebsstranges vom Fahrdrehzahlbereich (1400 min$^{-1}$ bis 2000 min$^{-1}$) in einen Drehzahlbereich unter 1000 min$^{-1}$ des Motors verschoben wird und somit störende Vibrationseinflüsse beim Fahren vermieden werden.

Ein Ausführungsbeispiel der Erfindung ist in der Zeichnung dargestellt und wird im folgenden näher beschrieben. Es zeigen

Fig. 1 eine schematische Darstellung eines Antriebsaggregats mit Zentralrohr,

Fig. 2 eine Schnittdarstellung des Zentralrohrs,

Fig. 3 einen Schnitt nach der Linie III-III der Fig. 2,

Fig. 4 eine Ansicht auf eine Verstärkungslasche in Pfeilrichtung S der Fig. 2 gesehen, und

Fig. 5 ein Diagramm über die Absenkung der Vibrationen im Vergleich zwischen einem bekannten geschlossenen Zentralrohr und einem Zentralrohr nach der Erfindung mit Längsschlitz.

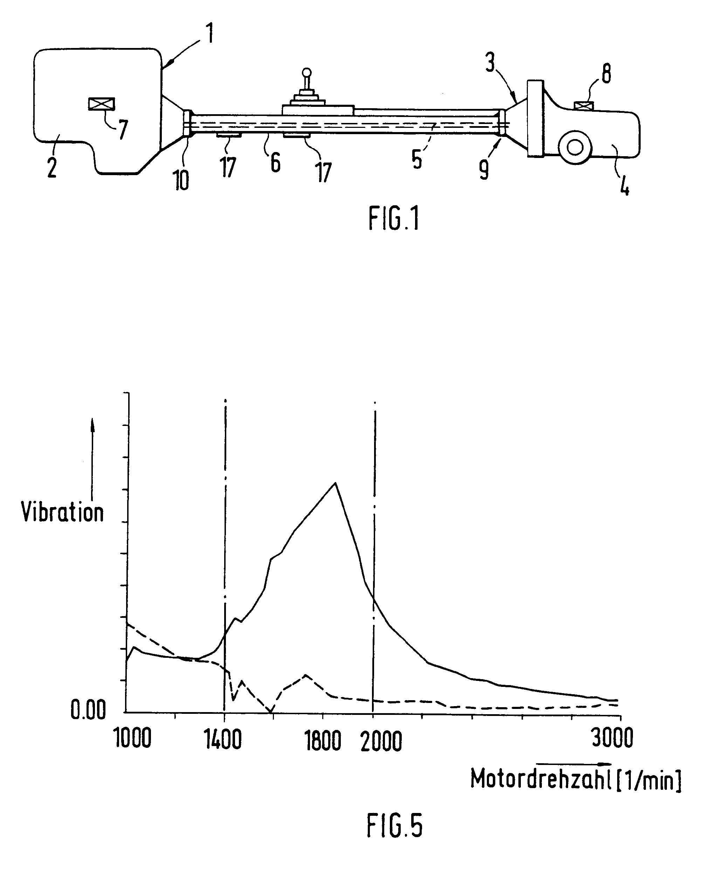

In Fig. 1 ist ein Antriebsaggregat eines Kraftfahrzeuges dargestellt, das eine vordere Triebwerkseinheit 1 mit einem Motor 2 und eine hintere Antriebseinheit 3 aufweist, die ein Getriebe 4 enthält, das mit dem Motor 2 über eine Antriebswelle 5 und einer Kupplung in Antriebsverbindung steht und seinerseits eine Hinterachse antreibt. Die Triebwerkseinheit 1 ist mit der Antriebseinheit 3 über ein Zentralrohr 6 verbunden, welches die Antriebswelle 5 aufnimmt. Die Triebwerkseinheit 1 und die Antriebseinheit 3 sind über elastische Lager 7 und 8 mit der Fahrzeugkarosserie oder Vorderachs- bzw. Hinterachs-Querträgern verbunden. Das Zentralrohr 6 ist vorzugsweise an seinem hinteren Ende bei 9 an der Antriebseinheit 3 und bei 10 an der Triebwerkseinheit 1 angeflanscht.

Das Zentralrohr 6 weist im vorderen, an die Triebwerkseinheit 1 anschließenden Bereich einen in seiner Länge l axial begrenzten Längsschlitz 11 auf. Dieser ist in einer senkrechten Längsmittenebene X-X des Zentralrohrs 6 vorgesehen und ist vorzugsweise in der dem Fahrzeugboden 18 abgekehrten Wandungsbereich 13 des Rohres 6 angeordnet, was den Vorteil des Ablaufs von sich ansammelnden Wasser hat. Eine gleiche Wirkung wird auch durch einen Längsschlitz im Zentralrohr 6 erzielt, der in dem dem Fahrzeugboden 18 zugekehrten Wandungsbereich 14 des Zentralrohrs 6 angeordnet ist.

Der Längsschlitz 11 beginnt im Abstand a vom Flansch 10 und erstreckt sich in einem Bereich von möglichst geringen Biegespannungen, so daß keine Beeinträchtigung der Festigkeit des Zentralrohres 6 erfolgt. Der Längsschlitz 11 ist relativ schmal, etwa mit einer Breite von 4 mm ausgeführt und weist eine Länge von etwa 650 mm bei einer Gesamtlänge des Zentralrohres 6 - gemessen von Flansch 9 zu Flansch 10 - von etwa 1690 mm auf.

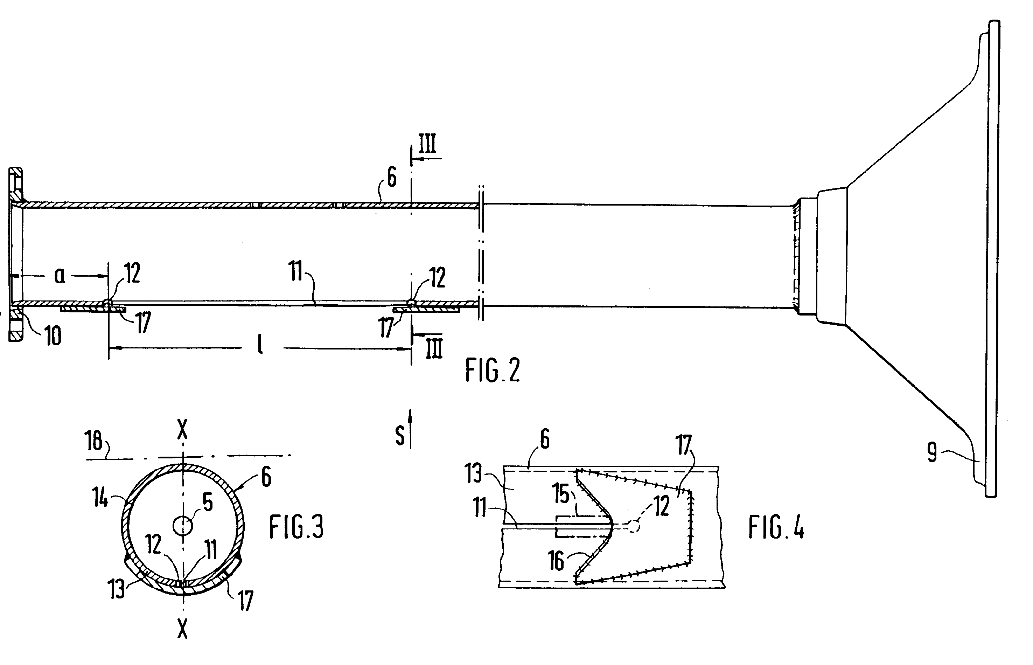

Um einer Rißbildung an den Enden des Längsschlitzes 11 entgegenzuwirken, läuft dieser jeweils in einer Bohrung 12 aus. Gleichzeitig ist der Schlitz 11 an seinen Ausläufen von einer Lasche 17 abgedeckt, die stoffschlüssig mit dem Zentralrohr 6 verbunden ist. Eine Abdeckung des Längsschlitzes 11 erfolgt über ein Klebeband 15, das andeutungsweise in Fig. 4 dargestellt ist.

In Fig. 5 ist ein Diagramm gezeigt, in dem die auftretenden Vibrationen über den Verlauf der Motordrehzahl für ein geschlossenes Zentralrohr nach dem Stand der Technik und einem geschlitzten Zentralrohr 6 nach der Erfindung dargestellt sind. In den kritischen Drehzahlbereichen 1400 bis 2000 min$^{-1}$ treten bei einem geschlossenen Zentralrohr 6 - wie in ausgezogener Linie gezeigt - hohe Vibrationen auf. Dagegen sind die Vibrationen bei Verwendung eines mit einem Längsschlitz 11 versehenen Zentralrohrs 6 in demselben Drehzahlbereich - wie die gestrichelte Linie zeigt - wesentlich geringer. Der Vibrationspegel im Drehzahlbereich um die 1000 min$^{-1}$ ist bei dem geschlitzten Zentralrohr 6 etwa wie bei einem geschlossenen Zentralrohr 6.

## Patentansprüche

1. Antriebsaggregat für Kraftfahrzeuge mit einer vorderen, elastisch an der Karosserie abgestützten Triebwerkseinheit, die mit einer hinteren Antriebseinheit durch ein Zentralrohr starr verbunden ist, durch das sich eine Antriebswelle erstreckt, **dadurch gekennzeichnet**, daß das Zentralrohr (6) zur Absenkung einer Torsionseigenfrequenz des Aggregates im vorderen, sich an die Triebwerkseinheit (1) anschließenden Bereich von geringen Biegespannungen wenigstens einen, in seiner Länge (l) axial begrenzten Längsschlitz (11) aufweist.

2. Antriebsaggregat nach Anspruch 1, **dadurch gekennzeichnet**, daß der Längsschlitz (11) in einer senkrechten Längsmittenebene (X-X) des Zentralrohrs (6) angeordnet ist.

3. Antriebsaggregat nach einem der Ansprüchen 1 oder 2, **dadurch gekennzeichnet**, daß der Längsschlitz (11) in einem dem Fahrzeugboden (18) abgekehrten Wandungsbereich (13) des Zentralrohrs (6) angeordnet ist.

4. Antriebsaggregat nach einem der Ansprüchen 1 oder 2, **dadurch gekennzeichnet**, daß der Längsschlitz (11) in einem dem Fahrzeugboden (18) zugerichteten Wandungsbereich (14) des Zentralrohrs (6) angeordnet ist.

5. Antriebsaggregat nach einem oder mehreren der vorhergehenden Ansprüche, **dadurch gekennzeichnet**, daß der Längsschlitz (11) im Abstand (a) zu einem vorderen Befestigungsflansch (10) des Zentralrohrs (6) angeordnet ist.

6. Antriebsaggregat nach einem oder mehreren der vorhergehenden Ansprüche, **dadurch gekennzeichnet**, daß der Längsschlitz (11) relativ schmal ausgeführt ist und eine Länge (1) aufweist, die sich etwa über einen Drittel der gesamten Länge des Zentralrohres (6) erstreckt.

7. Antriebsaggregat nach einem oder mehreren der vorhergehenden Ansprüche, **dadurch gekennzeichnet**, daß der Längsschlitz (11) endseitig jeweils in einer Bohrung (12) endet und die Enden jeweils von einer stoffschlüssig mit dem Zentralrohr (6) verbundenen Lasche (17) teilweise überdeckt ist, die eine dem Längsschlitz (11) zugerichtete Ausrundung (16) aufweist.

8. Antriebsaggregat nach einem oder mehreren der vorhergehenden Ansprüche, **dadurch gekennzeichnet**, daß der Längsschlitz (11) mit einem Klebeband (15) verschlossen ist.

## Claims

1. A prime mover for motor vehicles, having a front engine supported resiliently on the bodywork and rigidly connected to a rear drive unit by a central tube through which a drive shaft extends, **characterized in that** in the front area of low bending stresses adjacent to the engine (1) the central tube (6) has at least one longitudinal slot (11) limited axially in its length (1) for reducing a torsional inherent frequency of the prime mover.

2. A prime mover according to Claim 1, **characterized in that** the longitudinal slot (11) is formed in a vertical longitudinal median plane (X-X) of the central tube (6).

3. A prime mover according to one of Claims 1 or 2, **characterized in that** the longitudinal slot (11) is situated in a wall area (13) of the central tube (6) remote from the vehicle floor (18).

4. A prime mover according to one of Claims 1 or 2, **characterized in that** the longitudinal slot (11) is situated in a wall area (14) of the central tube (6) facing the vehicle floor (18).

5. A prime mover according to one or more of the preceding Claims, **characterized in that** the longitudinal slot (11) is situated at a distance (a) from a front fastening flange (10) of the central tube (6).

6. A prime mover according to one or more of the preceding Claims, **characterized in that** the longitudinal slot (11) is made relatively narrow and has a length (1) extending over about a third of the entire length of the central tube (6).

7. A prime mover according to one or more of the preceding Claims, **characterized in that** the longitudinal slot (11) terminates at its end in a bore (12), and the ends are partly covered in each case by a cover plate (17) integrally joined to the central tube (6) and having a rounded portion (16) facing the longitudinal slot (11).

8. A prime mover according to one or more of the preceding Claims, **characterized in that** the longitudinal slot (11) is closed by an adhesive tape (15).

EP 0 381 832 B1

**Revendications**

1. Groupe moteur pour véhicules automobiles comportant une unité motrice avant, prenant appui élastiquement contre la carrosserie, laquelle est assemblée rigidement à une unité de transmission arrière, par un tube central, à travers lequel s'étend un arbre moteur, **caractérisé en ce que** le tube central (6) comporte, pour abaisser une fréquence propre en torsion du groupe dans la région avant, se raccordant à l'unité motrice (1), où les sollicitations en flexion sont réduites, au moins une fente longitudinale (11) limitée axialement dans sa longueur (1).

2. Groupe moteur selon la revendication 1, **caractérisé en ce que** la fente longitudinale (11) est placée dans un plan médian longitudinal (X-X) vertical du tube central (6).

3. Groupe moteur selon l'une des revendications 1 ou 2, **caractérisé en ce que** la fente longitudinale (11) est placée dans une zone de paroi (13), opposée au plancher (18) du véhicule, du tube central (6).

4. Groupe moteur selon l'une des revendications 1 ou 2, **caractérisé en ce que** la fente longitudinale (11) est placée dans une zone de paroi (14), tournée vers le plancher (18) du véhicule, du tube central (6).

5. Groupe moteur selon une ou plusieurs des revendications précédentes, **caractérisé en ce que** la fente longitudinale (11) est située à une distance (a) d'une bride de fixation (10) avant du tube central (6).

6. Groupe moteur selon une ou plusieurs des revendications précédentes, **caractérisé en ce que** la fente longitudinale (11) est relativement étroite et présente une longueur (1) qui s'étend sur à peu près un tiers de toute la longueur du tube central (6).

7. Groupe moteur selon une ou plusieurs des revendications précédentes, **caractérisé en ce que** la fente longitudinale (11) aboutit à chaque extrémité dans un trou (12) et en ce que les extrémités sont partiellement recouvertes par une éclisse (17) assemblée par adhérence de matière au tube central (6), laquelle éclisse présente un arrondi (16) tourné vers la fente longitudinale (11).

8. Groupe moteur selon une ou plusieurs des revendications précédentes, **caractérisé en ce que** la fente longitudinale (11) est fermée par une bande adhésive (15).

4

FIG.1

Vibration

0.00

1000    1400    1800 2000                3000

Motordrehzahl [1/min]

FIG.5

FIG.2

FIG.3

FIG.4

EP 0 381 832 B1